# EUROPEAN PATENT APPLICATION

(11) **EP 1 748 366 A1**
(43) Date of publication of application: **31.01.2007**
(21) Application number: 05106974.8
(22) Date of filing: 28.07.2005
(51) Int. Cl.: G06F 17/30

(54) **A data processing system and method**

(71) Applicant: SAP AG, 69190 Walldorf (DE)
(72) Inventor: Enenkiel, Achim, 76139, Karlsruhe (DE)
(74) Representative: Richardt, Markus Albert

(57) **Abstract**

The present invention relates to a data processing system comprising:
- a web service (106; 306; 406) for receiving a request (122; 322; 422) from a requestor (108; 308, 308', 308",...; 408, 432) via a network (120; 320; 420), the request containing a first set of data (112; 312, 312', 312",...; 412),
- means (102; 302; 402) for storage of a second set of data (104; 304, 304', 304",...; 404) being coupled to the web service,

wherein the web service in response to the request being operable to:
- access the second set of data,
- perform a data consistency check of the first and second sets of data,
- generate a response (124; 324; 424) being indicative of a result of the data consistency check,
- send the response to the requestor via the network.

## Description

### Field of the invention

The present invention relates to the field of data processing and, more particularly to a data processing system and method for processing data in a web service environment.

### Background and prior art

Web services are an emerging technology that offers the dual promise of simplicity and pervasiveness. Web services represent the next level of function and efficiency in e-business. A Web service can be viewed as any mechanism by which an application or data processing service can be provided to other applications on the Internet.

Web services may be informational or transactional. That is, some services provide information of interest to the requestor while other services may actually lead to the invocation of business procedures. Examples of publicly available Web services today include stock quote services, services to retrieve news from Web news sources, and currency conversion services. For example, U.S. Pat. No. 6,604,135 discloses a method and system for location based web services.

For more detailed information on Web services technology reference is made to
http://www.microsoft.com/germany/ms/msdnbiblio/show_all.asp?siteid=450884
http://www.w3.org/TR/wsdl.html,
http://www.microsoft.com/germany/ms/msdnbiblio/show_all.asp?siteid=600570,http://n.ethz.ch/student/jodaniel/37-310/slides/UDDI_MarcoCicolini.ppt,
http://n.ethz.ch/student/jodaniel/37-310/slides/UDDI_DominikKaspar.ppt,
http://www.microsoft.com/germany/ms/msdnbiblio/show_all.asp?siteid=600156

One example of Web services are the services responsive to simple object access protocol (SOAP) messages. SOAP is an application invocation protocol that defies a protocol for exchanging information encoded as XML messages. Normally these services are described by WSDL (Web Service Description Language) notation stored in WSDL documents. A WSDL document can be stored in numerous ways such as in a file, in a DB2 XML registry / repository, or in a DB2 based UDDI registry, for example. UDDI (Universal Description, Discovery, Integration) is a protocol for describing Web services such that interested parties may easily discover them. Specifications for this registry and use of WSDL in the registry are available at http://www.uddi.org/. Service providers may register their services in a UDDI, specifying technical information about how to invoke the service. Often a WSDL document is stored in a UDDI registry in order to define the messages a particular Web services accepts and generates.

The design of UDDI allows enterprises that own Web service enabled applications to publish data about themselves and their services. By providing this information, UDDI implements a simplified form of searching for those interested in locating a particular service in which to fulfil an application process. The conventional UDDI search is focussed on single search criteria such as business name, business location, business categories, business identifier, service type by name, and discovery URL (Uniform Resource Locator).

Various approaches for implementing Web services are known from the prior art, such as from US patent applications 20030093436A1, 20030055868A1, 20030055624A1, 20030018661, 20030110242, 20030163513A1, 20040064503A1, 20040045005A1, 20040003130A1, 20030187841A1.

### Summary of the invention

In accordance with the present invention there is provided a data processing system comprising a web service for receiving a request from a requestor via a network, the requests containing a first set of data, means for storage of a second set of data being coupled to the web service, wherein the web service in response to the request being operable to (i) access the second set of data, (ii) perform a data consistency check of the first and second sets of data, (iii) generate a response being indicative of a result of the data consistency check, and (iv) send the response to the requestor via the network.

The present invention is particularly advantageous as it enables to perform an automatic data consistency check. This is useful for various applications such as for industrial control systems, accounting systems, enterprise resource planning systems or other distributed data processing systems that store related datasets and/or replicated datasets.

In accordance with an embodiment of the invention the request for performing a data consistency check contains an identifier of the requestor. The identifier is used for retrieval of the second dataset that corresponds to the first dataset for performance of the data consistency check. This is particularly advantageous as this enables to use the web service for various datasets stored on various computer systems. The identifier received by the web service as part of the request identifies the requesting computer system and thus the respective set of data which needs to be accessed by the web service in order to perform the data consistency check.

In accordance with an embodiment of the invention the request is received as an extended markup language (XML) file that comprises the identifier and data items of the set of data that need to be checked for consistency. Preferably, the XML file is received in a SOAP envelope.

In accordance with an embodiment of the invention the response that is generated by the web service identifies those data items that have been found to be inconsistent in the first and second datasets, if any. Such an itemized response facilitates the correction of the inconsistency and the analysis of the root cause of the inconsistency problem.

In accordance with an embodiment of the invention the second set of data contains a plurality of data items. Each data item is time stamped. For example, the time stamp indicates the posting date of the data item. The first set of data contains a plurality of data items for which the consistency with the corresponding data items contained in the second set of data needs to be checked. The respective request for performing the data consistency check specifies a time, e.g. a reference date. The data consistency check is performed for those data items that have a time stamp that is prior to the specified time or which equals the specified time.

In one application the data consistency check is performed in an industrial automation environment. For example, the first and second sets of data contain control parameters, such as for the control of electric drives, actuators and/or other industrial automation control components. In such an industrial automation system it can be crucial for the proper functioning of the automation system that a control parameter set that is used by various automation components is consistent over the automation components.

In another application, the present invention can be used for accounting systems and enterprise resource planning systems. For example, a payee has a computer system for storing a ledger of accounts receivables. The ledger of accounts receivables contains a list of postings reflecting open payment items. The payee's customer, i.e. the payer, has a respective ledger of accounts payables containing a list of postings indicating open payment items to be paid to the payee.

If the accounting is properly done the ledger of accounts receivables and the ledger of accounts payables contain matching postings. The consistency check of the ledger of accounts receivables and the ledger of accounts payables is initiated by generating a request containing the postings to be checked for consistency by the payee's computer system and sending the request to the web service coupled to the payer's computer system. The web service starts the performance of the consistency check and generates a response which is transmitted back to the payee's computer system.

The process of checking such related accounts for consistency is also referred to as 'balance confirmation'. As a prerequisite for performing such a balance confirmation it is required that the account items are posted in compliance with the applicable regulatory requirements such that they are auditable. This implies that each posted account item needs to have an assigned posting date. The posting dates of the account items enable to select a sub-set of the account items for the balance confirmation using a reference date as a selection criterion, i.e. only those account items that have a posting date prior or equal to the reference date are considered for performing the balance confirmation check.

In accordance with an embodiment of the invention a certified public accountant can access the payee's computer system from his or her computer system in order to read the postings from the ledger of account receivables that need to be checked for consistency with the ledger of accounts payables of a payer. The certified public accountant's computer system generates the request containing the relevant postings and an identifier for identification of the payee. This request is sent to the web service that is coupled to the payer's computer system. The web service initiates the data consistency check for the postings contained in the request with respect to corresponding postings contained in the ledger of accounts payables of the payee. A response is generated that indicates the result of the data consistency check and the response is sent back to the certified public accountant's computer system.

In accordance with an embodiment of the invention the data processing system implements a flight booking system. The first set of data contains a plurality of data items where each data item describes a flight booking and the date when the flight booking was posted by a travel agency. The second set of data contains the flight bookings received by an airline. The flight bookings of the second set of data also have an assigned booking date that indicates when the flight booking was entered. In order to perform a consistency check of the flight bookings contained in the first and second sets of data with respect to a specific reference date or reference time: A request that specifies the reference date or time is sent to the web service. In response the web service performs the data consistency check of the flight bookings that have been entered prior to the reference date or time. If each flight booking contained in the first set of data has a matching flight booking in the second set of data both datasets are consistent. If this is not the case the web service generates a respective response that indicates the one or more non-matching flight bookings. This response can trigger a workflow for correction of the data inconsistency.

In addition to flight bookings the data consistency check can also encompass canceled flight bookings.

In accordance with a further embodiment of the invention the settings or control parameters of an industrial control system are posted in the first and second sets of data where each data item has an assigned posting date or time stamp. For example, the first set of data containing a time stamped set of control parameters, such as desired temperature values, pressure values or the like is stored in a stored program control system (SPS). The SPS is coupled to a number of automation components that receive the control parameters from the SPS.

The automation components have local storage for posting parameter sets received from the SPS. The posting in the local storages of the automation components is also done by time stamping the control parameters, i.e. by assigning a data value that indicates the time when the respective parameter set was received from the SPS. The storage of the control parameter sets in such an auditable way can be crucial for providing evidence of the proper operation of the industrial control system, such as for defense against product liability claims. Further, posting such control parameters in an industrial automation system can be required by law, in particular concerning producing of pharmaceutical products or the like.

The SPS is coupled to a web service that can perform a data consistency check with respect to a specified automation component on request of the SPS. For this purpose the SPS sends a request to the web service that indicates a reference date and/or reference time. In response the web service identifies those postings that are stored by the automation component in its local storage that have a time stamp prior to the reference date or time. With respect to those postings a data consistency check is performed relative to the respective postings contained in the first set of data stored by the SPS.

### Brief description of the drawings

In the following preferred embodiments of the invention will be described by way of example only making reference to the drawings in which:
- Figure 1: is a block diagram of a first embodiment of a data processing system of the invention,
- Figure 2: is a flowchart illustrating a first embodiment of a method of the invention,
- Figure 3: is a block diagram of a second embodiment of a data processing system of the invention,
- Figure 4: is a block diagram of a third embodiment of a data processing system of the invention.

### Detailed description

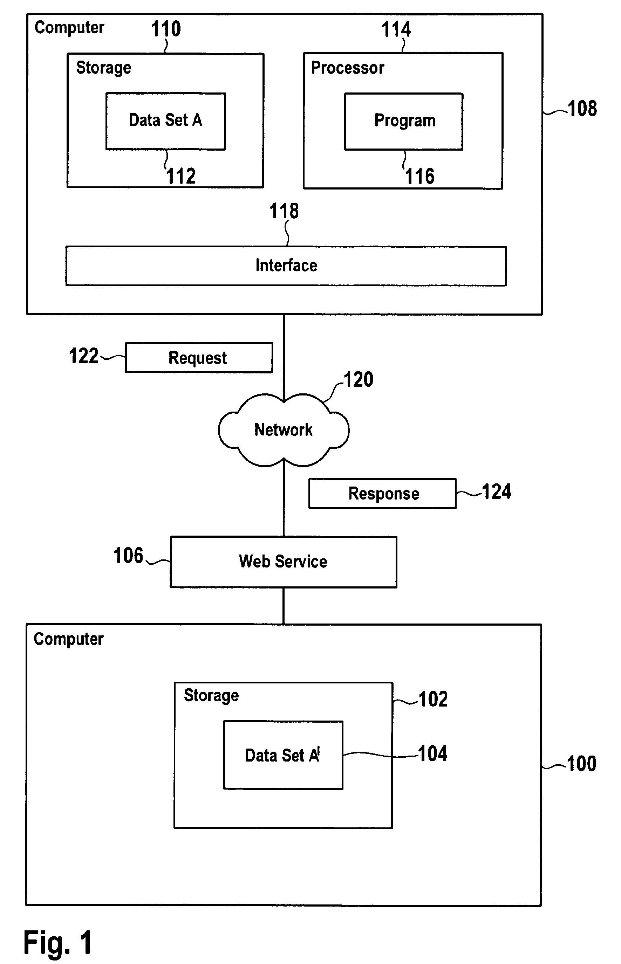

Fig. 1 shows a computer system 100 that has a storage 102. The dataset A' 104 is stored in the storage 102. The computer system 100 is coupled to a web service 106. The web service 106 can be implemented on a separate computer system or it can form an integral part of the computer system 100. In other words, the web service 106 can be closely or loosely coupled to the computer system 100.

A computer system 108 has a storage 110 for storing a dataset A 112. The datasets A and A' are related. For example, the dataset A and the dataset A' are supposed to be identical. Alternatively the dataset A' is supposed to be the result of a predefined transformation of the dataset A. In other words, the datasets A and A' are considered to be consistent if a predefined consistency criterion is met.

The computer 108 has a processor 114 for running a program 116.

Further, the computer 108 has an interface 118 for coupling the computer 108 to the web service 106 via a network 120. For example, the network 120 is an industrial Ethernet, or a company's intranet, an extranet or the Internet.

In operation, the program 116 generates a request 122 that contains the dataset A in order to initiate a data consistency check. The request 122 is sent from the interface 118 of the computer 108 via the network 120 to the web service 106. In response, the web service 106 initiates an access operation in order to access the dataset A' from the storage 102. The web service 106 applies the predefined data consistency criterion on the datasets A and A'.

Further, the web service 106 generates a response 124 that describes the result of the data consistency check. For example, the response indicates whether the data consistency criterion is met or not. In addition, the response 124 can specify any data items of the dataset A and A' that have led to data inconsistency.

The response 124 is sent from the web service 106 to the computer 108 via the network 120. The response 124 is received by the interface 118 of the computer 108 and further processed by the program 116. For example, if the response indicates that the data consistency criterion has not been met, the program 116 can output a respective alarm signal.

In one application the computers 100 and 108 are components of an industrial control system. For example, the computer 100 is a stored program control system and the computer 108 is a controller of an electric drive. The datasets A and A' are replicas of a control parameter set that is used by both industrial control components.

Alternatively the datasets A and A' contain accounting data. For example, the computer 108 belongs to a payee and the computer 100 to the payee's customer, i.e. a payer. The dataset A contains a ledger of accounts receivables and the dataset A' stored on the payer's computer 100 contains a ledger of accounts payables. In order to check the payee's and the payer's accounting for consistency the data consistency check is performed with respect to the ledger of accounts receivables and the ledger of accounts payables.

For example, the program 116 is an enterprise resource planning system. In this instance, the program 116 generates the request 122 containing postings of the dataset A, i.e. the ledger of accounts receivables. In addition the payee is identified in the request 122. When the web service 106 receives the request 122 it determines the ledger of accounts payables for the payee identified in the request 122, i.e. the dataset A'. The postings contained in the request 122 are checked for consistency with respective postings of the datasets A', i.e. the ledger of accounts payables. If the postings are matching, this is reported back to the payee's computer system 108 by means of response 124. If one or more of the postings fail the data consistency check, this is also reported back by means of response 124. Preferably, the response 124 details the non-matching postings in order to facilitate the error analysis and correction of the accounting.

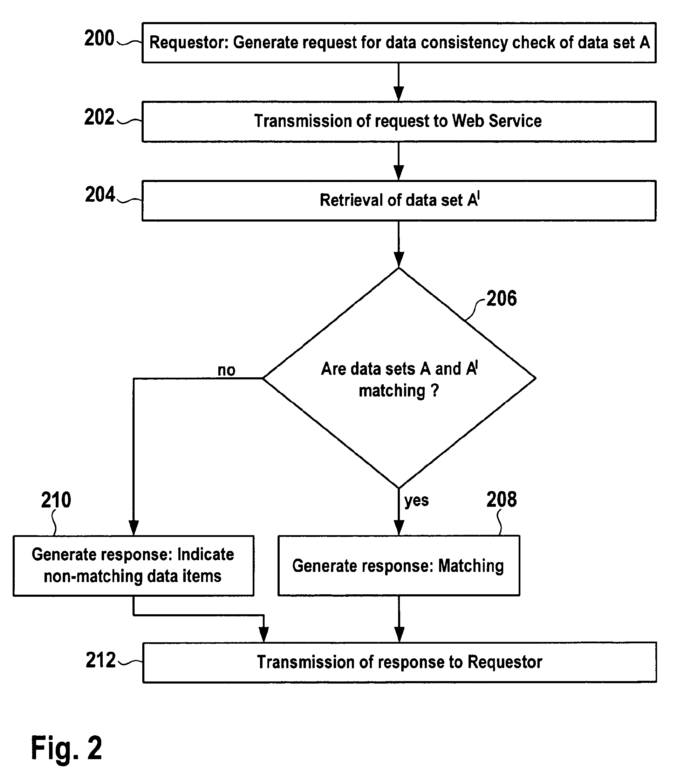

Fig. 2 shows a flowchart of an embodiment of a method of the invention.

In step 200 a requestor generates a request for performing a data consistency check with respect to a dataset A. The request is sent from the requestor to a web service, such as in the form of an XML message in a SOAP envelope (step 202). Preferably, the XML message contains an identifier of the requestor.

In step 204 the web service that has received the request performs a retrieval operation for retrieval of a dataset A' that is related to the dataset A received as part of the request. The retrieval can be performed by using the identifier of the requestor as a key.

In step 206 it is determined whether the datasets A and A' fulfill the data consistency criterion. For example, it is checked if the datasets A and A' are matching. This can be the case if the datasets are identical, if the absolute values of respective data items contained in the datasets A and A' are identical, or if the dataset A' is obtained by performing a predefined transformation on the dataset A.

If the datasets are matching, a respective response is generated in step 208. If the datasets are not matching a response is generated in step 210 that indicates the non-matching data items. From steps 208 and 210 the control goes to step 212 where the response is transmitted back to the requestor.

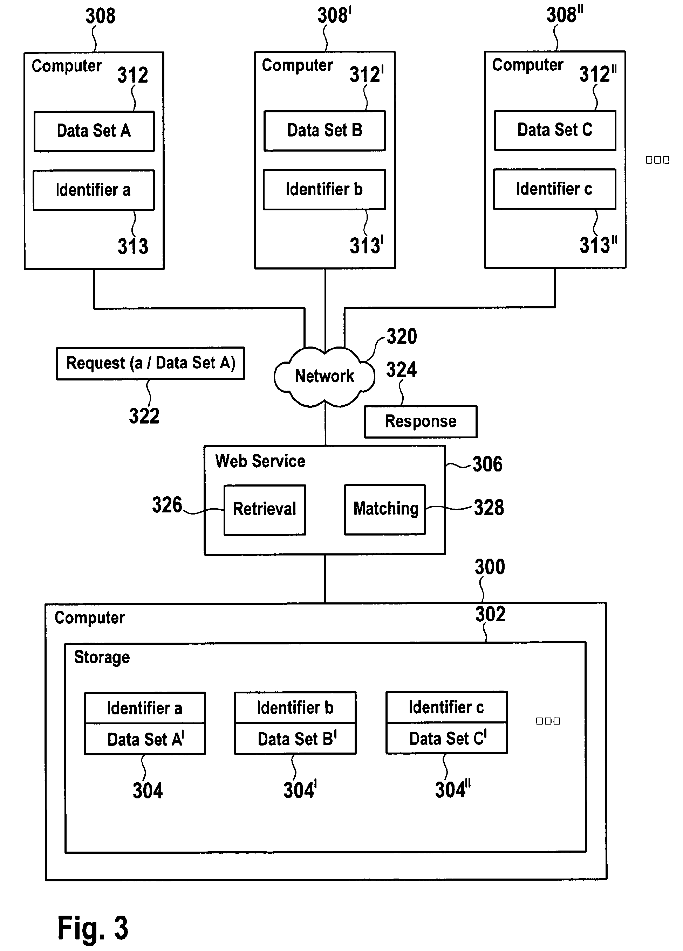

Fig. 3 shows an embodiment of a data processing system of the invention having multiple requestors. Elements in the embodiment of Fig. 3 that correspond to elements in the embodiment of Fig. 1 are designated by like reference numerals.

Multiple computer systems 308, 308', 308", ... are coupled to the web service 306 of the computer system 300 by means of network 320. The computer system 308 stores a dataset A 312 and an identifier a 313 that identifies the computer system 308. Likewise the computer system 308' stores a dataset B 312' and an identifier b 313' that identifies the computer system 308' etc.

Respective datasets A' 304, B' 304' and C' 304" are stored in the storage 302 of the computer system 300. The identifier a is assigned to the dataset A' in order to serve as a key for access to the dataset A'. Likewise the identifier b is assigned to the dataset B' as a key for retrieval of the dataset B', etc.

The web service 306 has a retrieval component 326 and a consistency checker component 328 for application of a consistency criterion in order to determine whether two related datasets are matching or not.

In operation, any one of the computer systems 308, 308', 308", ... can generate a request for performing a data consistency check. For example, the computer system 308 generates the request 322 that contains the identifier a of the requesting computer system 308 and a copy of the dataset A. In other words, the request 322 carries the identifier of the requesting computer system in addition to the dataset that is to be checked for data consistency.

The web service 306 receives the request 322 via the network 320. In response, the web service 306 invokes its retrieval component 326. The retrieval component 326 reads the identifier contained in the request 322, i.e. the identifier a in the example considered here, and performs a retrieval operation using the identifier a as a search criterion. As a result, the retrieval component 326 retrieves the dataset A' from the storage 302.

Next, the consistency checker component 328 is invoked in order to determine whether the dataset A and the related dataset A' are matching or not. A response 324 is generated by the web service 306 that reflects the result of the consistency check performed by the consistency checker component 328.

In one application the data processing system of Fig 3 is an industrial control system. The computer systems 308, 308', 308", ... can be embedded systems for controlling automation components, such as smart drives, actuators, etc.

The computer system 300 can be a stored program system that has an integrated, closely or loosely coupled web service. The datasets A, B, C, ... contain control parameters, such as filter coefficients, temperature values, speed values, etc for the control of the respective automation components controlled by the computer systems 308, 308', 308", ...

The computer 300 holds copies of these control parameter sets. At regular or at irregular time intervals the computers 308, 308', 308", ... initiates consistency checks of their respective control parameter sets using the web service 306 of the computer 300.

Alternatively, the data processing system is used for accounting purposes. For example, each of the computer systems 308, 308', 308", ... belongs to a different company. These companies have a common customer that uses the computer system 300. The customer has a separate account of open payment items to be paid to the respective company. For example, the dataset A' is an account of open payment items payable to the company that uses the computer system 308, the dataset B' is an account of open payment items payable to the company that uses the computer system 308', etc.

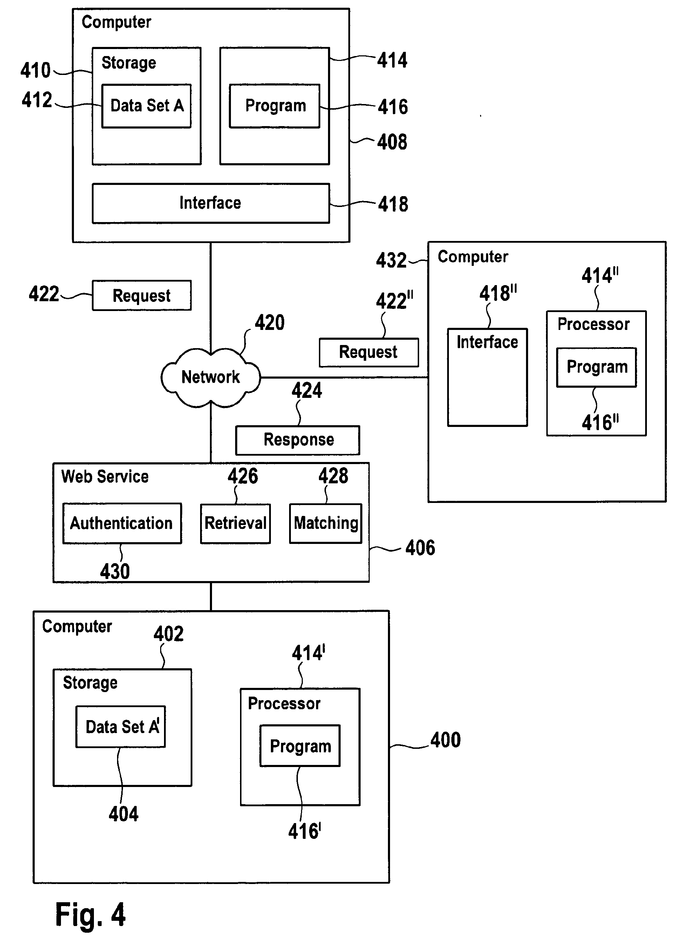

Fig. 4 shows still another embodiment of a data processing system of the invention. Elements in the embodiments of Fig. 4 that correspond to elements in the embodiments of Figs. 1 and 3 are designated by like reference numerals.

The computer system 400 in the embodiment of Fig. 4 has a processor 414' for execution of a program 416'. For example, the programs 416, 416' are similar enterprise resource planning programs, such as SAP R/3 systems.

The web service 406 has an authentication component 430 in order to restrict access to the data consistency check service provided by the web service 406 to authorized requestors. The authorization can be performed on the basis of any known authorization method, such as pass word based methods, digital signature or HBCI (Home Banking Computer Interface - www.hbci-zka.de).

In the preferred embodiment considered here the network 420 is a public network, such as the Internet. The computer system 432 is coupled to the network 420 by means of its interface 418". The computer system 432 has a processor 414" for execution of a program 416" that can be an enterprise resource planning system similar to the programs 416 and 416' or a specialized certified public accountant's software.

In operation both the programs 416 and 416" can generate requests 422 and 422", respectively for requesting a data consistency check. Before such a request can be processed authentication of the requesting computer system needs to be performed using the authentication component 430.

In order to generate the request 422", the computer system 432 sends a request to the computer system 408 in order to obtain a copy of the dataset A. The request 422" is then sent to the web service 406.

The response 424 that is generated by the web service is sent to the requestor, i.e. to the computer system 408 or to the computer system 432.

For example, the dataset A is an electronic ledger that contains account postings where each posting has an assigned posting date. The dataset A' is a corresponding ledger that contains respective postings with posting dates. For example, the dataset A is a ledger of payment items whereas the dataset A' is a ledger of receivables. The postings contained in the dataset A and A' are auditable i.e. each posting has an assigned posting date. In order to perform a balance confirmation with respect to a specific reference date the request 422 that is generated by the computer 408 includes such a reference date. As a consequence the web service 406 performs the consistency check, i.e. the balance confirmation check, only with respect to those postings contained in the dataset A' that have a posting date that is before or equal to the reference date specified in the request 422.

### List of Reference Numerals

| | |
|---|---|
| 100 | Computer system |
| 102 | Storage |
| 104 | Dataset |
| 106 | Web service |
| 108 | Computer system |
| 110 | Storage |
| 112 | Dataset |
| 114 | Processor |
| 116 | Program |
| 118 | Interface |
| 120 | Network |
| 122 | Request |
| 124 | Response |
| 300 | Computer system |
| 302 | Storage |
| 304 | Dataset |
| 306 | Web service |
| 308 | Computer system |
| 312 | Dataset |
| 313 | Identifier |
| 320 | Network |
| 322 | Request |
| 324 | Response |
| 326 | Retrieval component |
| 328 | Consistency checker component |
| 400 | Computer system |
| 402 | Storage |
| 404 | Dataset |
| 406 | Web service |
| 408 | Computer system |
| 410 | Storage |
| 412 | Dataset |
| 420 | Network |
| 422 | Request |
| 424 | Response |
| 426 | Retrieval component |
| 428 | Consistency checker component |
| 430 | Authentication component |
| 432 | Computer system |

## Claims

1. A data processing system comprising:
- a web service (106; 306; 406) for receiving a request (122; 322; 422) from a requestor (108; 308, 308', 308",...; 408, 432) via a network (120; 320; 420), the request containing a first set of data (112; 312, 312', 312",...; 412),
- means (102; 302; 402) for storage of a second set of data (104; 304, 304', 304",...; 404) being coupled to the web service,
wherein the web service in response to the request being operable to:
- access the second set of data,
- perform a data consistency check of the first and second sets of data,
- generate a response (124; 324; 424) being indicative of a result of the data consistency check,
- send the response to the requestor via the network.

2. The data processing system of claim 1, the request containing an identifier of the requestor, wherein the identifier is used for retrieval of the second dataset.

3. The data processing system of claim 1 or 2, the request comprising an extended markup language file, the extended markup language file comprising an identifier of the requestor and data items of the first set of data.

4. The data processing system of claim 1, 2 or 3, the web service being adapted to receive the request in a SOAP envelope.

5. The data processing system of any one of the preceding claims, the first set of data comprising at least one control parameter.

6. The data processing system of any one of the preceding claims, the first set of data comprising at least one posting.

7. The data processing system of any one of the preceding claims, the response containing data indicative of inconsistent data items of the first and second sets of data, if any.

8. A method of checking data consistency comprising:
- receiving a request (122; 322; 422) for performing a data consistency check from a requestor (108; 308, 308', 308",...; 408, 432) by a web service (106; 306; 406), the request containing a first set of data (112; 312, 312', 312",...; 412),
- accessing a second set of data (104; 304, 304', 304",...; 404) by the web service,
- performing a data consistency check of the first and second sets of data,
- generating a response (124; 324; 424) being indicative of a result of the data consistency check,
- sending the response to the requestor by the web service.

9. The method of claim 8, the request containing an identifier of the requestor, and further comprising performing a retrieval operation for retrieval of the second set of data using the identifier of the requestor as a key.

10. The method of claim 8 or 9, the request comprising an extended markup language file, the extended markup language file comprising an identifier of the requestor and data items of the first set of data.

11. A computer program product comprising computer executable instructions for performing a method of any one of claims 8 to 10.

12. A data processing system comprising:
- means (102; 302; 402) for storing a first set of data (112; 312, 312', 312",...; 412),
- means (114, 116; 414, 416, 414", 416") for generating a request (122; 322; 422) for performing a data consistency check, the request containing the first set of data,
- means (118; 418) for sending the request to a web service (106; 306; 406) and for receiving a response (124; 324; 424) from the web service, the response being indicative of a result of the data consistency check,
- means (114, 116; 414, 416, 414", 416") for processing the response.

13. The data processing system of claim 12, further comprising means for coupling to an industrial automation component.

14. The data processing system of claims 12 or 13, further comprising an enterprise resource planning software component.

15. A method of requesting a data consistency check comprising:
- generating a request (122; 322; 422) for performing a data consistency check, the request containing a first set of data (112; 312, 312', 312",...; 412)"
- sending the request to a web service (106; 306; 406),
- receiving a response (124; 324; 424) from the web service, the response being indicative of a result of the data consistency check performed by the web service.

16. A computer program product comprising computer executable instructions for performing the method in accordance with claim 15.

17. A method of checking a ledger of accounts receivables (412) and a ledger of accounts payables (404) for consistency, the ledger of accounts receivables being stored on a first computer system (408) and the ledger of accounts payables being stored on a second computer system (400), the second computer system comprising a web service (406), the method comprising:
- generating a request (422) for the data consistency check by the first computer system, the request containing postings of the ledger of accounts receivables,
- sending the request to the web service,
- performing a data consistency check of the postings contained in the request with respective postings of the ledger of accounts payables,
- generating a response (424) being indicative of a result of the data consistency check,
- sending the response to the first computer system.

18. The method of claim 17, the request further comprising an identifier of a payee to which the ledger of accounts receivables relates, and further comprising retrieval of the ledger of accounts payables using the identifier of the payee as a key.

19. The method of claim 17 or 18, the response being indicative of one or more of the postings contained in the request that do not match the ledger of accounts payables.

20. A distributed data processing system comprising a first computer system and a second computer system, the first computer system comprising:
- means (102; 302; 402) for storing a first set of data (112; 312, 312', 312",...; 412),
- means (114, 116; 414, 416, 414", 416") for generating a request (122; 322; 422) for performing a data consistency check, the request containing the first set of data,
- means (118; 418) for sending the request to a web service (106; 306; 406) and for receiving a response (124; 324; 424) from the web service, the response being indicative of a result of the data consistency check,
- means (114, 116; 414, 416, 414", 416") for processing the response, and the second computer system comprising:
- the web service (106; 306; 406) for receiving the request (122; 322; 422) from the first computer system (108; 308, 308', 308",...; 408, 432) via a network (120; 320; 420),
- means (102; 302; 402) for storage of a second set of data (104; 304, 304', 304",...; 404) being coupled to the web service,
wherein the web service in response to the request being operable to:
- access the second set of data,
- perform a data consistency check of the first and second sets of data,
- generate a response (124; 324; 424) being indicative of a result of the data consistency check,
- send the response to the requestor via the network.

21. The distributed data processing system of claim 20, further comprising a third computer system (432), the third computer system being adapted to access the first set of data stored on the first computer system, to generate the request (422"), to send the request to the web service and to receive the response from the web service.

22. The distributed data processing system of claim 20 or 21, the first set of data comprising a plurality of first time-stamped data items and the second set of data comprising a plurality of second time-stamped data items, the request specifying a reference time, the web service being operable to select a sub-set of the second data items, the sub-set of the second data items containing second data items that have a time stamp indicating a time prior to the reference time, and wherein the data consistency check is only performed for the sub-set.
